# EUROPÄISCHE PATENTSCHRIFT

(11) **EP 2 622 276 B1**
(45) Veröffentlichungstag und Bekanntmachung des Hinweises auf die Patenterteilung: **15.07.2015**
(21) Anmeldenummer: 11758482.1
(22) Anmeldetag: 23.09.2011
(51) Int. Cl.: F23D 11/40, F23L 15/04

(54) **ÖLVORMISCHBRENNER**
OIL PREMIX BURNER
BRÛLEUR À MAZOUT À PRÉMÉLANGE

(30) Priorität: 28.09.2010 DE 102010046733
(43) Veröffentlichungstag der Anmeldung: 07.08.2013
(73) Patentinhaber: Robert Bosch GmbH, 70442 Stuttgart (DE)
(72) Erfinder: RAUSCH, Rainer, 36304 Alsfeld (DE); WISSNER, Thomas, 35466 Rabenau (DE); MOSSER, Angelique, 35457 Lollar (DE); FERREIRA GONCALVES, Paulo, Jorge, 60320 Frankfurt Am Main (DE)
(86) Internationale Anmeldenummer: PCT/EP2011/066579
(87) Internationale Veröffentlichungsnummer: WO 2012/041775

(56) Entgegenhaltungen:
- DE-A1-102006 000 174
- DE-U1-202008 005 913
- US-A- 4 304 549

## Beschreibung

Die Erfindung betrifft einen Ölvormischbrenner nach dem Oberbegriff des Patentanspruches 1.

Derartige Ölvormischbrenner besitzen ein zylindrisches Brennelement mit einer Brenneroberfläche auf der äußeren Mantelfläche. Um eine zentrale Öleinspritzvorrichtung befindet sich in der Regel eine Verteilkammer für den entstehenden Ölnebel, damit dieser gleichmäßig von innen her die Brenneroberfläche erreicht. In die Verteilkammer gelangt Verbrennungsluft über mindestens eine Einströmöffnung im Bereich der Öleinspritzvorrichtung, wobei es sich um ein Einspritzventil oder eine Öldüse, welche an einem Düsenstock mit Ölvorwärmer befestigt ist, handeln kann. Stromaufwärts der Öleinspritzvorrichtung befindet sich ein Verbrennungsluftkanal mit Verbindung zu einem Gebläse.

Insbesondere bei Gasbrennern, die modulierend betrieben werden, also bei denen der Leistungsbereich zwischen einem geringen Anteil der Maximalleistung und der Maximalleistung gesteuert werden kann, haben sich die sogenannten Vormischbrenner durchgesetzt. Bei diesen Brennern wird der Brennstoff und die zu dessen Verbrennung erforderliche Verbrennungsluft von der Flamme örtlich getrennt vermischt und dann verbrannt. Dazu wird meist ein zylindrisches Brennelement als Flammenhalter eingesetzt, der für das Brennstoff-/Luft-Gemisch durchlässig ist und einen Innenraum umschließt, dem das Brennstoff-/Luft-Gemisch zugeführt wird. Mit dieser Technologie lassen sich kleine Flammen mit guten Abgaswerten, relativ kleine Flammenhalter und große Modulationsbereiche verwirklichen.

Das Grundprinzip eines Ölvormischbrenners ist die Vermischung von fein zerstäubtem Öl mit vorgewärmter Luft. Durch dieses Prinzip ist es möglich, dass sich zum Beispiel eine sogenannte kalte Flamme bildet, so dass der Brennstoff über eine Oberfläche verbrannt werden kann. Die Oberflächenverbrennung ist allerdings auch ohne kalte Flamme möglich. Generell ist das Erwärmen von Luft auf Grund der geringen Wärmekapazität relativ schwierig, weil dazu entweder ein effektiver Wärmeübergang über eine Wand auf den Luftstrom und/oder hohe Wandtemperaturen notwendig sind.

Ein Ölvormischbrenner ist zum Beispiel aus der DE 10 2006 000 174 A1 bekannt. Dabei wird die Tatsache genutzt, dass heiße Luft das Öl verdampft und somit ein Gasgemisch gebildet werden kann, welches wie bei einem Gas-Vormischbrenner durch den Flammhalter hindurch tritt und abbrennt. Durch die Zumischung von Abgas zur Verbrennungsluft zur Luftvorwärmung wird zudem die Bildung von Stickoxiden verringert und dadurch soll sich auch das Anlaufverhalten verbessern, weil der Betriebspunkt relativ schnell erreicht wird. Die Verbrennungsluft wird zur Wärmeaufnahme durch eine mindestens abschnittsweise über eine Brenneroberfläche ragende, von der Brennerflamme beabstandete Leiteinrichtung geführt und in einer Düse in der Leiteinrichtung beschleunigt, damit das Abgas aus dem Brennraum angesaugt und mit der Luft vermischt werden kann.

Auch die DE 26 43 293 A1 beschreibt einen solchen Kanal für die Verbrennungsluft, der als Zylinder um den hinteren Bereich eines Brennstabes bzw. Brennelementes angeordnet ist. Da für die Vermischung und die Verbrennungsreaktion ein bestimmter Mindestbrennelementdurchmesser erforderlich ist, kann dieser Aufbau allerdings zu einem gegenüber bekannten Bauformen insgesamt relativ großen Feuerraum führen.

Weiterhin sind aus der DE 21 07 514 A eine Vorrichtung zum Heizen mit Infrarotstrahlung und aus der US 1 082 576 A ein Ölbrenner mit flächig unterhalb der Brenneroberfläche angeordneten, abgeschlossenen, flächig durchgehenden Kanälen zur Luftvorwärmung bekannt. Aus diesen nicht unterbrochenen Kanälen wird in beiden Fällen die vorgewärmte Luft zum Zentrum mit der Brennstoffzufuhr zurück geleitet und dort mit Brennstoff vermischt. Von diesem Zentrum aus tritt das Gemisch in die Brennzone ein, ohne wieder in die Nähe des zur Vorwärmung dienenden Luft-Strömungsweges zu kommen.

Der Erfindung liegt daher die Aufgabe zugrunde, bei einem Ölvormischbrenner die Verbrennungsqualität und die Robustheit, besonders im Hinblick auf Modulationsfähigkeit, zu optimieren.

Erfindungsgemäß wurde dies mit den Merkmalen des Patentanspruches 1 gelöst. Vorteilhafte Weiterbildungen sind den Unteransprüchen zu entnehmen.

Der Ölvormischbrenner ist dadurch gekennzeichnet, dass das Innenrohr und das Außenrohr in Reihe durchströmt werden. Dabei ist der Luftwärmetauscher oberhalb der Brenneroberfläche angeordnet und besteht aus mehreren symmetrisch über den Umfang verteilten, sich achsparallel zum Brennelement mindestens über einen Teil dessen Länge erstreckenden und parallel durchströmten Doppelrohrelementen.

Jedes Doppelrohrelement weist an der Stirnseite des freien Endes eine Umlenkzone als Verbindung zwischen Innenrohr und einem zwischen Innenrohr und Außenrohr gebildeten Ringraum auf.

So ist vorteilhafterweise jedes Doppelrohrelement an seiner Eintrittsseite des Innenrohres mit dem Verbrennungsluftkanal verbunden. Dort tritt die Verbrennungsluft ein und gelangt jeweils nach Verlassen des Innenrohres in einer Umlenkzone an der Stirnseite des freien Endes in den zwischen Innenrohr und Außenrohr gebildeten Ringraum. In diesem strömt die bereits vorgewärmte Luft in Richtung öleinspritzvorrichtungsnaher Stirnseite zurück und nimmt weitere Wärme auf. Sie tritt dort als vorgewärmte Verbrennungsluft im Bereich um die Öleinspritzvorrichtung in die Verteilkammer ein.

In einer bevorzugten Ausführungsform überragt in einem Doppelrohrelement am öleinspritzvorrichtungsnahen Ende das Innenrohr das Außenrohr in Längsrichtung, so dass es den mit der Verteilkammer in Verbindung stehenden Ausmündungsbereich des Ringspalts durchgreift und durch eine Begrenzungswand bis in den Verbrennungsluftkanal hinein reicht.

In einer weiteren bevorzugten Ausführungsform weisen Innenrohr und/oder Außenrohr Turbulenz erzeugende Oberflächen, eine Profilierung und/oder Oberflächen vergrößernde Elemente auf, um den Wärmeübergang zu verbessern und insbesondere die wandnahe Strömung aufzubrechen. Dazu sind das Innenrohr und/oder das Außenrohr mit Profilierungen und/oder Sicken zur Turbulenzerzeugung versehen, welche vorzugsweise spiralförmig auf der Rohroberfläche verlaufen. Besonders vorteilhaft ist es dabei, wenn mindestens das Innenrohr auf seiner Außenseite mit Mitteln zur Beeinflussung der Strömung im umgebenden Ringspalt versehen ist.

Vorzugsweise sind die Durchmesser von Innenrohr und Außenrohr so bemessen, dass der freie Querschnitt im Verlauf des Strömungsweges der Verbrennungsluft mindestens gleich bleibt oder zunimmt. Damit wird eine Anpassung an das mit der Lufttemperatur steigende Volumen erreicht. Andererseits ist über die Querschnittsgestaltung auch die Strömungsgeschwindigkeit, und somit die Wärmeaufnahmefähigkeit bzw. auch die Wärmebelastung der Außenoberfläche, in den jeweiligen Kanalbereichen gezielt beeinflussbar.

In noch einer weiteren Ausführungsform kann das Innenrohr auch mit mehreren Durchbrechungen in seinem Mantel versehen sein. Diese lassen eine Direktströmung in den umgebenden Ringspalt zu, sorgen im Ringspalt für lokale Turbulenzen und Kühleffekte, und sind im Querschnitt vorzugsweise jeweils mindestens um das Zehnfache kleiner als der Innendurchmesser des Innenrohres.

Weiterhin kann die Erfindung vorsehen, dass Innenrohr und Außenrohr mindestens punktuell aneinander abgestützt sind. Dabei erfolgt dies insbesondere in der Umlenkzone an der Stirnseite des freien Endes und/oder durch Einbauteile und/oder eine spezielle Ausbildung der Rohrwand, indem diese beispielsweise mit stegartigen Vorsprüngen, Ausstellungen, kleinen Abkantungen im Endbereich oder lokalen Prägungen versehen ist.

Mit den erfindungsgemäßen Maßnahmen werden bei Ölvormischbrennern sowohl die Verbrennungsqualität als auch die Robustheit verbessert. Insbesondere für modulierenden Betrieb ist die erfindungsgemäße Anordnung mit dem integrierten Luftwärmetauscher vorteilhaft. Dies trifft für Brenner mit einem zylindrischen Brennelement genauso zu wie für Flächenbrenner mit einer horizontalen Brenneroberfläche und dem erfindungsgemäßem Aufbau. Die Flamme brennt an bzw. in der Brenneroberfläche, so dass dabei oberhalb davon Energie aus der Flamme ausgekoppelt und zur Erwärmung der Verbrennungsluft genutzt wird. Damit entfällt eine elektrische Luftvorwärmung während des stationären Brenner-Betriebszustandes. Dies wirkt sich positiv auf die Energiebilanz des Brenners aus.

Ein bedeutender Vorteil der erfindungsgemäß integrierten Luftvorwärmungsfunktion ist, dass mit zunehmender Brenneroberfläche, beispielsweise bei einem Brennelement für größere Leistungsbereiche, auch die Wärmetauscheroberfläche in gleichem Maße erweiterbar ist, indem einfach längere Doppelrohrelemente zum Einsatz kommen. Damit bleibt die angestrebte Lufttemperatur konstant. Jedes Rohr wird durch seine spezifische Leistungsdichte und die Rohr-Anzahl in Abhängigkeit von der Gesamtleistung definiert. Außer als an den Doppelrohrelementen des Luftwärmetauschers sind dadurch an der Peripherie bzw. sonstigen Brennerkomponenten keine konstruktiven Änderungen für die Darstellung unterschiedlicher Brenner-Leistungsgrößen nötig. Der sonstige Brenneraufbau bleibt somit genauso erhalten wie Anforderungen an den umgebenden Feuerraum.

Mit dem erfindungsgemäßen Luftwärmetauscher soll Verbrennungsluft in allen Brenner-Betriebspunkten mit einer Mindesttemperatur von ca. 350 °C bereitgestellt werden. Dabei ist zu beachten, dass unter Einhaltung die maximal zulässigen Oberflächentemperatur am Luftwärmetauscher die Länge von Rohrelementen herkömmlicher Bauart, d. h. in Form von glatten, U-förmigen Wärmetauscher-Bögen, sowie die Anzahl der Rohre nicht beliebig gesteigert werden kann. Neben den Grenzen in der Einhaltung des maximalen Biegeradius steigen mit längeren herkömmlichen Rohren ansonsten auch die Materialtemperaturen weiter an und bringen eine Gefahr des Durchbiegens mit sich.

Im Gegensatz dazu ist erfindungsgemäß aber eine Längenausdehnung aufgrund thermischer Belastung möglich, da jedes Doppelrohrelement des Luftwärmetauschers nur einseitig eingespannt ist. Größere, einem Brennelement entsprechend angepasste Längen bzw. Auskragungen von Doppelrohrelementen lassen sich durch gegenseitige Abstützung von Innen- und Außenrohr realisieren.

Mit der Erfindung wird der Einsatz profilierter Rohre, welche den Wärmeübergang begünstigen und für eine geringe, Material schonende Oberflächentemperatur sorgen, erst möglich. Besonders das Innenrohr kann als Turbulenzanreger bzw. Strömungsbrecher fungieren. Generell lässt sich mit den erfindungsgemäßen Doppelrohrelementen eine gegenüber dem Stand der Technik höhere Packungsdichte auf einem Teilkreis im Bereich der Brenneroberfläche erzielen. Außerdem besitzen diese Vorteile in Bezug auf Druckverlust und Skalierbarkeit. Vom Prinzip her wird erfindungsgemäß mit einem Doppelrohrelement ein Gegenstromwärmetauscher realisiert, denn die Luftströmung in den beiden Kanälen läuft entgegensetzt.

Die Zeichnung stellt ein Ausführungsbeispiel der Erfindung dar. Es zeigt:

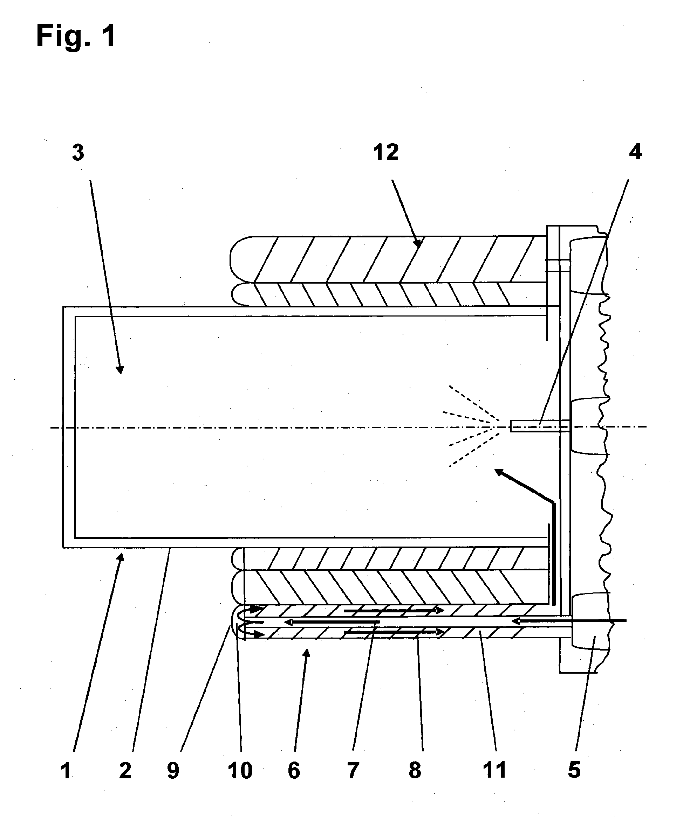

Fig. 1: einen Ölvormischbrenner im Längsschnitt und

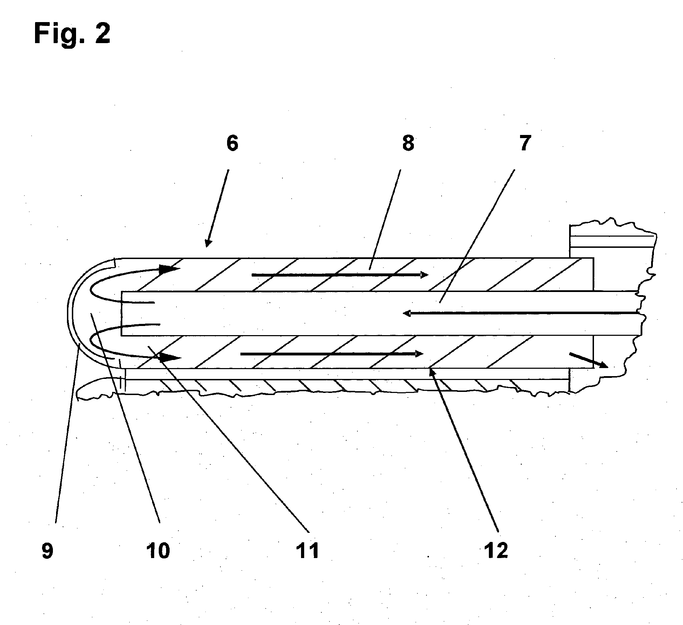

Fig. 2: einen Längsschnitt durch eine Teil eines Luftwärmetauschers.

Der Ölvormischbrenner besteht im Wesentlichen aus einem zylindrischen Brennelement 1, mit einer Brenneroberfläche 2 auf der äußeren Mantelfläche, einer Verteilkammer 3 unterhalb der Brenneroberfläche 2, einer zentralen Öleinspritzvorrichtung 4 und einem an ein stromaufwärts angeordnetes Gebläse angeschlossenen Verbrennungsluftkanal 5.

Das Brennelement 1 besitzt zur Vorwärmung der Verbrennungsluft im Bereich oberhalb der Brenneroberfläche 2 einen Luftwärmetauscher, welcher aus mehreren, symmetrisch über den Umfang verteilten, parallel durchströmten Doppelrohrelementen 6 mit einem in Reihe durchströmten Innenrohr 7 und einem zu diesem konzentrischen Außenrohr 8 besteht.

Jedes Doppelrohrelement 6 ist an der Stirnseite des freien Endes mit einer Kappe 9 verschlossen, so dass eine strömungsgünstige Umlenkzone 10 als Verbindung zwischen Innenrohr 7 und einem zwischen diesem und dem Außenrohr 8 gebildeten Ringraum 11 aufweist. Aus dem Verbrennungsluftkanal 5 gelangt Verbrennungsluft in das Innenrohr 7 jedes Doppelrohrelementes 6 und über die Umlenkzone 10 in den Ringraum 11. Darin strömt sie in Richtung Öleinspritzvorrichtung 4 zurück und tritt in die Verteilkammer 3 ein.

Sowohl das Innen- als auch das Außenrohr 7, 8 besitzen Turbulenz erzeugende Oberflächen und sind mit einer Profilierung 12, als spiralförmig auf den Rohroberflächen verlaufende Sicken dargestellt, versehen.

## Patentansprüche

1. Ölvormischbrenner mit einem Brennelement (1), einer Brenneroberfläche (2) auf der äußeren Mantelfläche, einer Verteilkammer (3) unterhalb der Brenneroberfläche (2), einer zentralen Öleinspritzvorrichtung (4), einem an ein stromaufwärts angeordnetes Gebläse angeschlossenen Verbrennungsluftkanal (5) sowie einem Luftwärmetauscher für die Vorwärmung der Verbrennungsluft im Bereich der Brenneroberfläche (2), wobei der Luftwärmetauscher aus mindestens einem Doppelrohrelement (6) mit einem Innenrohr (7) und einem zu diesem konzentrischen Außenrohr (8) besteht,
**dadurch gekennzeichnet, dass** das Innenrohr (7) und das Außenrohr (8) in Reihe durchströmt werden.

2. Ölvormischbrenner nach Anspruch 1,
**dadurch gekennzeichnet, dass** der Luftwärmetauscher oberhalb der Brenneroberfläche (2) angeordnet ist und aus mehreren symmetrisch über den Umfang verteilten, sich achsparallel zum Brennelement (1), mindestens über einen Teil dessen Länge erstreckenden und parallel durchströmten Doppelrohrelementen (6) besteht.

3. Ölvormischbrenner nach den Ansprüchen 1 oder 2,
**dadurch gekennzeichnet, dass** jedes Doppelrohrelement (6) an der Stirnseite des freien Endes eine Umlenkzone (10) als Verbindung zwischen Innenrohr (7) und einem zwischen Innenrohr (7) und Außenrohr (8) gebildeten Ringraum (11) aufweist.

4. Ölvormischbrenner nach einem der Ansprüche 1 bis 3,
**dadurch gekennzeichnet, dass** jedes Doppelrohrelement (6) mit der Eintrittsseite des Innenrohres (7) mit dem Verbrennungsluftkanal (5) verbunden ist, dass die Verbrennungsluft jeweils nach Verlassen des Innenrohres (7) in einer Umlenkzone (10) an der Stirnseite des freien Endes in den zwischen Innenrohr (7) und Außenrohr (8) gebildeten Ringraum (11) gelangt, in Richtung öleinspritzvorrichtungsnaher Stirnseite zurück strömt und dort als vorgewärmte Verbrennungsluft im Bereich um die Öleinspritzvorrichtung (4) in die Verteilkammer (3) eintritt.

5. Ölvormischbrenner nach einem der Ansprüche 1 bis 4,
**dadurch gekennzeichnet, dass** in einem Doppelrohrelement (6) am öleinspritzvorrichtungsnahen Ende das Innenrohr (7) das Außenrohr (8) in Längsrichtung überragt, so dass es den mit der Verteilkammer (3) in Verbindung stehenden Ausmündungsbereich des Ringspalts (11) durchgreift und durch eine Begrenzungswand bis in den Verbrennungsluftkanal (5) hinein reicht.

6. Ölvormischbrenner nach einem der Ansprüche 1 bis 5,
**dadurch gekennzeichnet, dass** das Innenrohr (7) und/oder das Außenrohr (8) Turbulenz erzeugende Oberflächen, eine Profilierung (12) und/oder Oberflächen vergrößernde Elemente aufweisen.

7. Ölvormischbrenner nach einem der Ansprüche 1 bis 6,
**dadurch gekennzeichnet, dass** das Innenrohr (7) und/oder das Außenrohr (8) mit Profilierungen (12) und/oder Sicken zur Turbulenzerzeugung versehen sind, welche vorzugsweise spiralförmig auf der Rohroberfläche verlaufen.

8. Ölvormischbrenner nach einem der Ansprüche 1 bis 7,
**dadurch gekennzeichnet, dass** mindestens das Innenrohr (7) auf seiner Außenseite mit Mitteln zur Beeinflussung der Strömung im umgebenden Ringspalt (11) versehen ist.

9. Ölvormischbrenner nach einem der Ansprüche 1 bis 8,
**dadurch gekennzeichnet, dass** die Durchmesser von Innenrohr (7) und Außenrohr (8) so bemessen sind, dass der freie Querschnitt im Verlauf des Strömungsweges der Verbrennungsluft mindestens gleich bleibt oder zunimmt.

10. Ölvormischbrenner nach einem der Ansprüche 1 bis 9,
**dadurch gekennzeichnet, dass** das Innenrohr (7) mit mehreren Durchbrechungen in seinem Mantel versehen ist, welche eine Direktströmung in den umgebenden Ringspalt (11) zulassen, im Ringspalt (11) für lokale Turbulenzen und Kühleffekte sorgen und jeweils im Querschnitt mindestens um das Zehnfache kleiner als der Innendurchmesser des Innenrohres (7) sind.

11. Ölvormischbrenner nach einem der Ansprüche 1 bis 10,
**dadurch gekennzeichnet, dass** Innenrohr (7) und Außenrohr (8) mindestens punktuell aneinander abgestützt sind, wobei dies insbesondere in der Umlenkzone (10) an der Stirnseite des freien Endes und/oder durch Einbauteile und/oder eine spezielle Ausbildung der Rohrwand erfolgt.

## Claims

1. Oil premix burner having a burner element (1), a burner surface (2) on the outer lateral surface, a distribution chamber (3) beneath the burner surface (2), a central oil injection device (4), a combustion air duct (5) connected to a fan arranged upstream, and an air heat exchanger for pre-heating the combustion air in the region of the burner surface (2), wherein the air heat exchanger consists of at least one double-tube element (6) with an inner tube (7) and, concentric with the latter, an outer tube (8),
**characterized in that** the inner tube (7) and the outer tube (8) are flowed through in series.

2. Oil premix burner according to Claim 1,
**characterized in that** the air heat exchanger is arranged above the burner surface (2) and consists of multiple double-tube elements (6) which are distributed symmetrically about the circumference, extend parallel with the axis of the burner element (1) and at least over part of the length of the latter, and are flowed through in parallel.

3. Oil premix burner according to Claim 1 or 2,
**characterized in that** each double-tube element (6) has, on the end face of the free end, a redirection zone (10) as connection between the inner tube (7) and an annular space (11) formed between the inner tube (7) and the outer tube (8).

4. Oil premix burner according to one of Claims 1 to 3,
**characterized in that** the inlet side of the inner tube (7) of each double-tube element (6) is connected to the combustion air duct (5), **in that** in each case the combustion air, after it has left the inner tube (7), enters, in a redirection zone (10) at the end face of the free end, the annular space (11) formed between the inner tube (7) and the outer tube (8), flows back in the direction of the end face close to the oil injection device, where it enters the distribution chamber (3), in the region around the oil injection device (4), as pre-heated combustion air.

5. Oil premix burner according to one of Claims 1 to 4,
**characterized in that**, in a double-tube element (6), at the end close to the oil injection device, the inner tube (7) projects longitudinally beyond the outer tube (8), such that it passes through the discharge region, connected to the distribution chamber (3), of the annular gap (11) and reaches through a boundary wall into the combustion air duct (5).

6. Oil premix burner according to one of Claims 1 to 5,
**characterized in that** the inner tube (7) and/or the outer tube (8) have turbulence-generating surfaces, a profile (12) and/or surface-increasing elements.

7. Oil premix burner according to one of Claims 1 to 6,
**characterized in that** the inner tube (7) and/or the outer tube (8) are provided with profiles (12) and/or beading for generating turbulence, which preferably run spirally on the tube surface.

8. Oil premix burner according to one of Claims 1 to 7,
**characterized in that** at least the inner tube (7) is provided, on its outer side, with means for influencing the flow in the surrounding annular gap (11).

9. Oil premix burner according to one of Claims 1 to 8,
**characterized in that** the diameters of the inner tube (7) and of the outer tube (8) are dimensioned such that the free cross section increases or at least remains constant along the flow path of the combustion air.

10. Oil premix burner according to one of Claims 1 to 9,
**characterized in that** the inner tube (7) is provided with multiple cutouts in its jacket, which permit a direct flow into the surrounding annular gap (11), produce localized turbulence and cooling effects in the annular gap (11) and whose cross section is always at least ten times smaller than the internal diameter of the inner tube (7).

11. Oil premix burner according to one of Claims 1 to 10,
**characterized in that** the inner tube (7) and the outer tube (8) are supported by one another at least punctually, wherein this is effected in particular in the redirection zone (10) on the end face of the free end and/or by means of inserts and/or a special design of the tube wall.

## Revendications

1. Brûleur à mazout à prémélange comprenant un élément de brûleur (1), une surface de brûleur (2) sur la surface d'enveloppe extérieure, une chambre de distribution (3) sous la surface de brûleur (2), un dispositif d'injection de mazout central (4), un canal d'air de combustion (5) raccordé à une soufflante disposée en amont ainsi qu'un échangeur de chaleur à air pour le préchauffage de l'air de combustion dans la région de la surface de brûleur (2), l'échangeur de chaleur à air se composant d'au moins un élément tubulaire double (6) avec un tube interne (7) et un tube externe (8) concentrique par rapport à celui-ci, **caractérisé en ce que** le tube interne (7) et le tube externe (8) sont parcourus par l'écoulement en série.

2. Brûleur à mazout à prémélange selon la revendication 1,
**caractérisé en ce que** l'échangeur de chaleur à air est disposé au-dessus de la surface de brûleur (2) et se compose de plusieurs éléments tubulaires doubles (6) répartis symétriquement sur la périphérie, s'étendant avec leurs axes parallèles à l'élément de brûleur (1) au moins sur une partie de sa longueur et parcourus par l'écoulement en parallèle.

3. Brûleur à mazout à prémélange selon les revendications 1 ou 2,
**caractérisé en ce que** chaque élément tubulaire double (6) présente, au niveau du côté frontal de l'extrémité libre, une zone de déviation (10) en tant que connexion entre le tube interne (7) et un espace annulaire (11) formé entre le tube interne (7) et le tube externe (8).

4. Brûleur à mazout à prémélange selon l'une quelconque des revendications 1 à 3,
**caractérisé en ce que** chaque élément tubulaire double (6) est connecté par le côté d'entrée du tube interne (7) au canal d'air de combustion (5), **en ce que** l'air de combustion parvient à chaque fois après sa sortie du tube interne (7) dans une zone de déviation (10) au niveau du côté frontal de l'extrémité libre dans l'espace annulaire (11) formé entre le tube interne (7) et le tube externe (8), revient dans la direction du côté frontal proche du dispositif d'injection de mazout et, de là, entre en tant qu'air de combustion réchauffé dans la chambre de distribution (3) dans la région autour du dispositif d'injection de mazout (4).

5. Brûleur à mazout à prémélange selon l'une quelconque des revendications 1 à 4,
**caractérisé en ce que** dans un élément tubulaire double (6) au niveau de l'extrémité proche du dispositif d'injection de mazout, le tube interne (7) dépasse du tube externe (8) dans la direction longitudinale de telle sorte qu'il s'engage à travers la région d'embouchure de la fente annulaire (11) en liaison avec la chambre de distribution (3) et pénètre par une paroi de limitation jusque dans le canal d'air de combustion (5).

6. Brûleur à mazout à prémélange selon l'une quelconque des revendications 1 à 5,
**caractérisé en ce que** le tube interne (7) et/ou le tube externe (8) présentent des surfaces générant des turbulences, un profilage (12) et/ou des éléments augmentant les surfaces.

7. Brûleur à mazout à prémélange selon l'une quelconque des revendications 1 à 6,
**caractérisé en ce que** le tube interne (7) et/ou le tube externe (8) sont pourvus de profilages (12) et/ou de moulures pour générer des turbulences, lesquels s'étendent de préférence en spirale sur la surface du tube.

8. Brûleur à mazout à prémélange selon l'une quelconque des revendications 1 à 7,
**caractérisé en ce qu'**au moins le tube interne (7) est pourvu sur son côté extérieur de moyens pour influencer l'écoulement dans la fente annulaire périphérique (11).

9. Brûleur à mazout à prémélange selon l'une quelconque des revendications 1 à 8,
**caractérisé en ce que** les diamètres du tube interne (7) et du tube externe (8) sont dimensionnés de telle sorte que la section transversale libre reste au moins identique ou augmente suivant l'étendue de la voie d'écoulement de l'air de combustion.

10. Brûleur à mazout à prémélange selon l'une quelconque des revendications 1 à 9,
**caractérisé en ce que** le tube interne (7) est pourvu de plusieurs orifices dans son enveloppe, lesquels permettent un écoulement direct dans la fente annulaire périphérique, (11), assurent des turbulences et des effets de refroidissement locaux dans la fente annulaire (11) et présentent respectivement une section transversale au moins dix fois plus petite que le diamètre intérieur du tube interne (7).

11. Brûleur à mazout à prémélange selon l'une quelconque des revendications 1 à 10,
**caractérisé en ce que** le tube interne (7) et le tube externe (8) sont supportés au moins ponctuellement l'un contre l'autre, ceci s'effectuant notamment dans la zone de déviation (10) au niveau du côté frontal de l'extrémité libre et/ou par des pièces d'insertion et/ou par une réalisation spéciale de la paroi tubulaire.
